# EUROPÄISCHE PATENTSCHRIFT

(11) **EP 4 140 667 B1**
(45) Veröffentlichungstag und Bekanntmachung des Hinweises auf die Patenterteilung: **20.03.2024**
(21) Anmeldenummer: 22188674.0
(22) Anmeldetag: 04.08.2022
(51) Int. Cl.: B65H 3/08, B65H 3/48, B25J 15/00, B25J 15/06

(54) **GREIFVORRICHTUNG UND VERFAHREN ZUM HANDHABEN EINER PRODUKTLAGE UNTER VERWENDUNG DERSELBEN**
GRIPPING DEVICE AND METHOD FOR HANDLING A PRODUCT LAYER USING THE SAME
DISPOSITIF DE PRÉHENSION ET PROCÉDÉ DE MANIPULATION D'UNE COUCHE DE PRODUIT EN UTILISANT CEUX-CI

(30) Priorität: 23.08.2021 DE 102021209221
(43) Veröffentlichungstag der Anmeldung: 01.03.2023
(73) Patentinhaber: OPTIMA life science GmbH, 74523 Schwäbisch Hall (DE)
(72) Erfinder: Winterer, Philipp, 73635 Rudersberg (DE); Jansen, Johannes, 74545 Michelfeld (DE)
(74) Vertreter: Patentanwälte Ruff, Wilhelm, Beier, Dauster & Partner mbB

(56) Entgegenhaltungen:
- EP-A1- 3 566 984
- DE-A1-102010 029 746
- DE-A1-102017 106 252
- JP-B2- 3 866 947
- JP-B2- 5 027 399
- US-B2- 6 558 109

## Beschreibung

### ANWENDUNGSGEBIET UND STAND DER TECHNIK

Die Erfindung betrifft eine Greifvorrichtung und Verfahren zum Handhaben einer Produktlage unter Verwendung derselben. Die Erfindung betrifft insbesondere eine Greifvorrichtung, welche zum Handhaben gasdurchlässiger Produktlagen, wie beispielsweise einer Gasdiffusionslage (GDL) einer Membran-Elektroden-Anordnung (MEA) einer Brennstoffzelle, geeignet ist.

Als Produktlagen werden im Zusammenhang mit der Anmeldung Einzellagen eines Stapels bezeichnet, wobei eine oberste Produktlage für eine Verarbeitung dem Stapel entnommen werden soll. Insbesondere bei dünnen Produktlage ist es nicht möglich, diese mittels eines formschlüssigen Greifers zu ergreifen. Es ist daher bekannt, Vakuumgreifer einzusetzen, mittels welche die oberste Produktlage über Unterdruck ansaugen und einzeln vom Stapel abheben.

Aus DE102010029746A1 ist eine Greifvorrichtung zur Handhabung flächigen Greifguts mit einem Bernoulli-Greifer zum Ansaugen des Greifguts in einer Ansaugrichtung bekannt, umfassend Führungskolben zum Abfangen und Führen des angesaugten Greifguts, welche gegenüber dem Bernoulli-Greifer derart in Ansaugrichtung einfahrbar und entgegen der Ansaugrichtung ausfahrbar angeordnet ist, dass beim Abfangen des Greifguts durch Einfahren des Führungskolbens die Bewegung des Greifguts in Richtung des Bernoulli-Greifers gebremst wird.

Aus DE10201702030468 A1 ist ein Bernoulli-Greifer bekannt, welcher mehrere, rings um eine Zentrumsachse verteilt angeordnete Luftausströmdüsen aufweist.

Aus EP 3 566 984 A1 ist ein Manipulationssystem mit einem Vakuumgenerator und einer Greifereinheit umfassend mindestens einen flexiblen Saugnapf und mindestens einen starren Greifer bekannt, wobei jeder von dem mindestens einen flexiblen Saugnapf und dem mindestens einen starren Greifer in Fluidverbindung mit dem Vakuumgenerator steht, und wobei jeder von dem mindestens einen flexiblen Saugnapf und dem mindestens einen starren Greifer dazu konfiguriert ist, in eine Oberfläche des Gegenstands einzugreifen, basierend auf einer Vakuumsaugkraft, die durch den mindestens einen Vakuumgenerator selektiv erzeugt wird durch in einem ersten Materialhandhabungsvorgang den mindestens einen flexiblen Saugnapf; in einem zweiten Materialhandhabungsvorgang den mindestens einen starren Greifer; und in einem dritten Materialhandhabungsvorgang den mindestens einen flexiblen Saugnapf und den mindestens einen starren Greifer.

Bei einem Aufnehmen von gasdurchlässigen Produktlagen mit herkömmlichen Vakuumgreifern ist es teilweise nicht zuverlässig möglich, die oberste Produktlage einzeln zu greifen, sondern es werden Doppel- oder Mehrfachlagen aufgenommen.

Bei einer Handhabung einer GDL ist ein einzelnes Ergreifen zudem erschwert, da die GDL-Lagen aufgrund ihrer faserigen Struktur sich miteinander verhaken können.

### AUFGABE UND LÖSUNG

Es ist eine Aufgabe der Erfindung, eine Greifvorrichtung zu schaffen, welche eine zuverlässige Aufnahme einer Produktlage, insbesondere einer gasdurchlässigen Produktlage ermöglicht. Es ist eine weitere Aufgabe der Erfindung, ein Verfahren zum Handhaben einer Produktlage unter Verwendung derselben zu schaffen.

Diese Aufgaben werden gelöst durch die Greifeinrichtung mit den Merkmalen des Anspruchs 1 und das Verfahren mit den Merkmalen des Anspruchs 6. Weitere vorteilhaften Ausgestaltungen ergeben sich aus den Unteransprüchen.

Gemäß einem ersten Aspekt wird eine Greifvorrichtung zur Handhabung von Produktlagen, insbesondere zur Aufnahme und zum Transport einer auf einem Stapel abgelegten Produktlage geschaffen, welche eine Saugglocke mit einem Innenraum und einen unteren Rand, einen in dem Innenraum angeordneten Bernoulli-Greifer und mehrere, außerhalb der Saugglocke und über den Umfang des Bernoulli-Greifers verteilt angeordnete Druckelemente umfasst, wobei die Druckelemente ein freies Ende aufweisen, welches in Richtung einer Längsachse der Saugglocke elastisch verstellbar ist, wobei die freien Enden der Druckelemente in einem belastungsfreien Zustand von einer Ebene des unteren Rands abragen.

Im Zusammenhang mit der Anmeldung werden die Ausdrücke "ein" oder "eine" lediglich als unbestimmter Artikel und nicht als Zählwörter verwendet. Insbesondere können in dem Innenraum der Saugglocke mehr als ein Bernoulli-Greifer vorgesehen sein.

Als Bernoulli-Greifer oder Bernoulli-Sauger wird ein mit Druckgas, insbesondere Druckluft, betriebener Greifer mit einer zentralen Ausströmöffnung bezeichnet, bei welchem durch ein Ausströmen des Druckgases aus der Ausströmöffnung aufgrund des Bernoulli-Prinzips ein Unterdruck erzeugt wird.

Als belastungsfrei wird im Zusammenhang mit der Anmeldung ein Zustand bezeichnet, bei welchen keine äußeren Kräfte an den freien Enden angreifen. Je nach Ausgestaltung der Druckelemente und/oder der Greifeinrichtung können dabei Gravitationskräfte und/oder interne Kräfte der Druckelemente und/oder Kräfte, welche mittels an der Greifvorrichtung angebrachter Zusatzelemente aufgebracht werden, auf die Druckelemente wirken und diese in die Ausgangslage zwingen.

Die freien Enden ragen von der Ebene des unteren Rands ab, d.h. sie ragen in eine Richtung weg von dem Innenraum der Saugglocke. Ein Maß, um welches die freien Enden abragen, kann dabei je nach Anwendungsfall durch den Fachmann geeignet gewählt werden.

Die von der Saugglocke im belastungsfreien Zustand abragenden Druckelemente werden bei Aufsetzen der Saugglocke auf die Produktlage elastisch verformt. Die Verformung erfolgt in Ausgestaltungen derart, dass die freien Enden in der Ebene des Rands der Saugglocke liegen. Bei einem Anheben wird mittels des Bernoulli-Greifers auf einen Bereich innerhalb der Saugglocke eine Saugkraft und aufgrund interner Rückstellkräfte mittels der Druckelemente auf einen Bereich außerhalb der Saugglocke eine der Saugkraft entgegengesetzte Kraft aufgebracht, sodass die aufgenommene Produktlage verwölbt wird. Eine versehentlich mit der aufzunehmenden Produktlage angesaugte Produktlage erfährt dabei nicht die gleiche Verwölbung, sodass es zu einer Relativbewegung zwischen den Produktlagen und somit zu einer Ablösung der Produktlagen kommt.

In einer Ausgestaltung sind drei oder mehr Druckelemente vorgesehen, welche je nach Ausgestaltung gleichmäßig oder unregelmäßig über den Umfang der Saugglocke verteilt angeordnet sind.

Die Druckelemente sind in einer Ausgestaltung ähnlich der Führungskolben gemäß DE102010029746A1 gestaltet, wobei die Druckelemente aufgrund der Saugglocke eine andere Funktion erfüllen, als die aus dem Stand der Technik bekannten Führungskolben.

In einer anderen Ausgestaltung sind die Druckelemente als Sauggreifer gestaltet, welche an dem freien Ende eine Saugöffnung aufweisen. Als Sauggreifer werden Elemente bezeichnet, welche mit einer Saugöffnung bezeichnet, welche an eine Oberfläche anlegbar und mit einem Vakuum- oder Unterdruck-Erzeuger verbindbar sind, sodass die Sauggreifer aufgrund des Vakuums oder Unterdrucks an der Oberfläche anhaften. Die Sauggreifer sind in einer Ausgestaltung als Balgsauggreifer umfassend einen elastisch verstellbaren Faltenbalg gestaltet. Die Balgsauggreifer werden an die Oberfläche unter Verformung des Faltenbalgs angenähert, wobei ohne Aktivierung des Vakuum- oder Unterdruck-Erzeugers beim Abheben der Produktlage mittels der Rückstellkräfte des Faltenbalgs eine Kraft für eine Verwölbung auf die Produktlage aufbringbar ist. Für einen Transport der Produktlage nach einem erfolgten Aufnehmen sind die Sauggreifer aktivierbar, sodass die Produktlage unter Verformung des Faltenbalgs angesaugt wird. Die Produktlage wird so mittels der Sauggreifer lagegesichert.

In einer Ausgestaltung sind die Sauggreifer, insbesondere die Faltenbälge der Balgsauggreifer, derart dimensioniert, dass in einem aktiven Zustand der Sauggreifer das freie Ende der Sauggreifer in der Ebene des unteren Rands angeordnet ist. Die aufgenommene Produktlage wird so im Wesentlichen in einer Ebene ohne Verwölbung gehalten.

In einer Ausgestaltung ist eine außerhalb der Saugglocke angeordnete Blasluftdüse vorgesehen. In vorteilhaften Ausgestaltungen sind zwei an gegenüberliegenden Seiten der Saugglocke angeordnete Blasluftdüsen vorgesehen. Die Blasluftdüsen sind derart angeordnet, dass bei Absenken der Greifvorrichtung auf den Stapel eine Öffnung der Blasluftdüsen, insbesondere ein parallel zur Längsachse der Saugglocke verlaufender Schlitz, an einem Rand des Stapels im Bereich der oberen Produktlagen angeordnet ist. Die Blasluftdüse ist bei einem Anheben der Produktlage aktivierbar, sodass die oberen Produktlagen aufgefächert werden. Die Blasluftdüsen unterstützen so eine Vereinzelung der Produktlagen.

Die Greifvorrichtung umfasst in einer Ausgestaltung eine Sensorvorrichtung mit einem Abstandssensor und/oder einem Doppellagen-Erfassungssensor. Der Abstandssensor ist dabei derart eingerichtet, dass mittels des Abstandssensor ein Abstand der Saugglocke von einer obersten Produktlage eines Stapels erfassbar ist. Dadurch ist eine exakte Positionierung der Saugglocke auf der aufzunehmenden Produktlage möglich. Der Doppellagen-Erfassungssensor dient in einer Ausgestaltung der qualitativen Erfassung der Anzahl an mittels der Greifvorrichtung aufgenommenen Produktlagen, wobei mittels des Doppellagen-Erfassungssensors erfassbar ist, ob keine, eine oder mehr als eine Produktlage aufgenommen wurden. Der Doppellagen-Erfassungssensor umfasst zu diesem Zweck in einer Ausgestaltung eine Ultraschalleinrichtung, mittels welcher eine Dämpfung eines ausgesendeten Ultraschalls aufgrund der aufgenommenen Produktlagen erfassbar ist. Andere Sensoreinrichtungen zur berührungslosen Erfassung einer Dicke des aufgenommenen oder nicht aufgenommenen Greifguts sind denkbar.

Gemäß einem zweiten Aspekt wird ein Verfahren zur Handhabung von Produktlagen, insbesondere zur Aufnahme und zum Transport einer auf einem Stapel abgelegten Produktlage, mittels einer Greifvorrichtung geschaffen, wobei für ein Anheben der Produktlage der Bernoulli-Greifer aktiviert wird, sodass bei einem Anheben der Produktlage die Produktlage mittels einer Saugkraft des innerhalb der Saugglocke angeordneten Bernoulli-Greifers und mittels Rückstellkräfte der außerhalb der Saugglocke angeordneten Druckelemente verwölbt wird.

Sofern die Druckelemente als Sauggreifer gestaltet werden diese in einer Ausgestaltung bei einem Anheben der Produktlage nicht aktiviert und für einen Transport der Produktlage nach einem Anheben der Produktlage aktiviert werden, sodass die aufgenommene Produktlage fixiert wird. Als Aktivieren der Sauggreifer wird dabei ein Aktivieren eines mit dem Sauggreifern verbundenen Vakuum- oder Unterdruck-Erzeugers oder ein Anschließen der Sauggreifer an einen Vakuum- oder Unterdruck-Erzeuger mittels eines Ventils bezeichnet.

In einer Ausgestaltung ist vorgesehen, dass obere Produktlagen des Stapels mittels der außerhalb der Saugglocke angeordnete Blasluftdüse bei einem Anheben der Produktlage aufgefächert werden. Die Blasluftdüsen werden zu diesem Zweck in einer Ausgestaltung nach einem Absetzen der Saugglocke auf den Produktstapel aktiviert.

In einer Ausgestaltung ist vorgesehen, dass bei einem Transport der Produktlage eine korrekte Aufnahme der Produktlage mittels eines Doppellagen-Erfassungssensor erfasst wird. In einer Ausgestaltung ist dabei vorgesehen, dass ein an der Greifvorrichtung angeordneter und mit der Greifvorrichtung bewegtes Sensorelement mit einem stationär angeordneten Sensorelement zusammenwirkt, wobei die Greifvorrichtung derart angetrieben wird, dass sie entlang des stationär angeordneten Sensorelement passiert. Je nach Ausgestaltung erfolgt die Passage in einer Langsamfahrt oder mit einem Zwischenstopp.

Alternativ oder zusätzlich ist in einer Ausgestaltung vorgesehen, dass bei einem Aufsetzen der Greifvorrichtung auf einen Stapel zur Aufnahme einer Produktlage ein Abstand zu der Produktlage mittels eines Abstandssensors erfasst wird. Dabei ist eine exakte Positionierung der Saugglocke auf dem Stapel unter Vermeidung hoher Aufsetzkräfte sicherstellbar.

### KURZBESCHREIBUNG DER ZEICHNUNGEN

Weitere Vorteile und Aspekte der Erfindung ergeben sich aus den Ansprüchen und aus der Beschreibung eines Ausführungsbeispiels der Erfindung, das nachfolgend anhand der Figuren erläutert ist. Dabei zeigt:

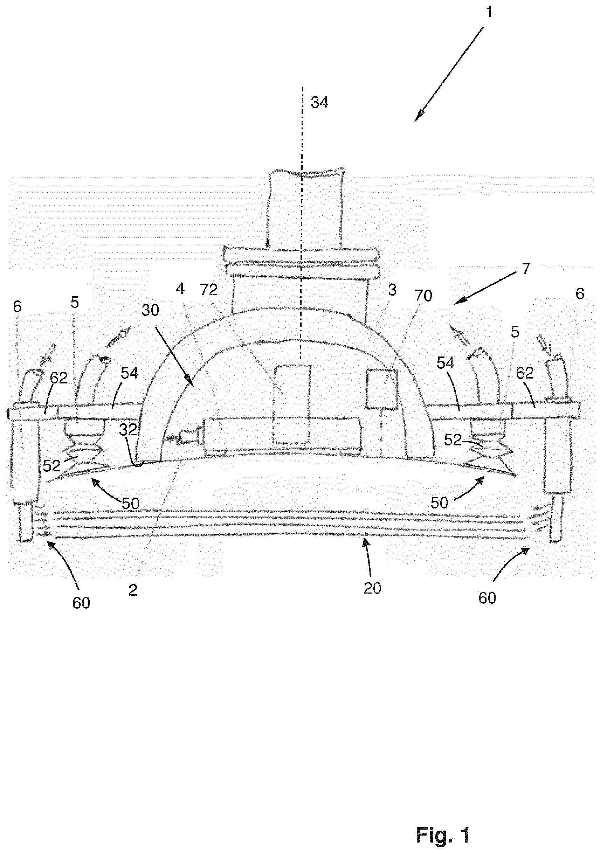

- Fig. 1: in einer Seitenansicht ein Ausführungsbeispiel einer Greifvorrichtung beim Anheben einer Produktlage von einem Stapel.

### DETAILLIERTE BESCHREIBUNG DER AUSFÜHRUNGSBEISPIELE

Fig. 1 zeigt schematisch eine Greifvorrichtung 1 beim Anheben einer obersten Produktlage 2 von einem Stapel. In Fig. 1 sind dabei lediglich mehrere obere Produktlagen 20 des Stapels dargestellt.

Die Greifvorrichtung 1 umfasst eine Saugglocke 3, einen im Innenraum 30 der Saugglocke 3 angeordneten Bernoulli-Greifer 4 und mehrere, über den Umfang der Saugglocke 3 verteilt, außerhalb der Saugglocke 3 angeordnete Druckelemente 5. In dem dargestellten Ausführungsbeispiel sind vier, gleichmäßig über den Umfang der Saugglocke 3 verteilt angeordnete Druckelemente 5 vorgesehen, von welchen nur zwei sichtbar sind.

Die dargestellte Greifvorrichtung 1 umfasst weiter mindestens eine, in dem dargestellten Ausführungsbeispiel zwei, an gegenüberliegenden Seiten der Saugglocke 3 außen angeordnete Blasluftdüsen 6 sowie eine Sensorvorrichtung 7.

Die Saugglocke 3 weist einen in Richtung eines freien Endes der Greifvorrichtung 1 weisenden unteren Rand 32 auf.

Die Druckelemente 5 weisen ein in Richtung einer Längsachse 34 der Saugglocke 3 elastisch verstellbares freies Ende 50 auf. Das freie Ende 50 ragt in einem belastungsfreien Zustand von einer Ebene des unteren Rands 32 ab. In dem dargestellten Ausführungsbeispiel sind die Druckelemente 5 als Balgsauggreifer gestaltet, welche jeweils einen elastisch verstellbaren Faltenbalg 52 aufweisen. An dem freien Ende 50 ist dabei eine Saugöffnung vorgesehen, welche auf der Produktlage 2 aufsetzbar ist. In dem dargestellten Ausführungsbeispiel sind an einer Außenseite der Saugglocke 3 vier Ausleger 54 (nur zwei sichtbar in Fig. 1) vorgesehen, mittels welchen die Druckelemente 5 an der Saugglocke 3 montiert sind.

Die Blasluftdüsen 6 sind in dem dargestellten Ausführungsbeispiel als parallel zu der Längsachse 34 der Saugglocke 3 angeordnete Blasluft-Schlitzdüsen gestaltet, welche eine parallel zu der Längsachse 34 der Saugglocke 3 ausgerichteten Schlitz 60 aufweisen. Der Schlitz 50 ist in Höhe der oberen Produktlagen 20 des Stapels angeordnet und in Richtung dieser Produktlagen 20 gerichtet. In dem dargestellten Ausführungsbeispiel sind an einer Außenseite der Saugglocke 3 zwei Ausleger 62 vorgesehen, mittels welchen die Blasluftdüsen 6 an der Saugglocke 3 montiert sind. Dabei sind in dem dargestellten Ausführungsbeispiel die Blasluftdüsen 6 jeweils zwischen einem in Fig. 1 sichtbaren ersten Druckelemente 5 und einem zweiten, durch den ersten in der Darstellung verdeckten Druckelemente 5 angeordnet. In anderen Ausgestaltungen sind die Blasluftdüsen 6 stationär an einer Ablage des Stapels (nicht dargestellt) angeordnet, wobei eine Steuereinrichtung der Blasluftdüsen 6 mit einer eine Bewegung und Aktivierung des Bernoulli-Greifers 4 und der Balgsauggreifer steuernden Steuereinrichtung für einen Synchronisation kommuniziert.

Die Sensorvorrichtung 7 umfasst in dem dargestellten Ausführungsbeispiel einen Abstandssensor 70, welcher dazu ausgebildet ist, einen Abstand zu einer obersten Produktlage eines Stapels, und somit eine Höhe des Stapels zu erfassen, und einen Doppellagen-Erfassungssensor 72. In einer Ausgestaltung umfasst der Doppellagen-Erfassungssensor 72 einen an der Greifvorrichtung 1, genauer an dem Bernoulli-Greifer 4, angeordneten Ultraschallsender und einen stationär angeordneten Ultraschallempfänger (nicht dargestellt), welcher entlang eines Wegs der Greifvorrichtung 1 zu einem Ablageort derart positioniert ist, dass die Greifvorrichtung 1 den stationären Ultraschallempfänger überfährt.

Der Stapel ist auf oder in einer nicht dargestellten Ablage angeordnet. In einer Ausgestaltung ist mittels des Abstandssensors 70 zudem erfassbar, ob auf oder in der Ablage noch Produktlagen vorhanden sind oder ob der Stapel vollständig abgebaut wurde. Zu diesem Zweck ist in einer Ausgestaltung an einem Boden der Ablage eine Aussparung vorgesehen, welche durch auf der Ablage vorhandene Produktlagen abgedeckt wird. Dabei werden in einer Ausgestaltung eine Position der Greifvorrichtung 1 und ein mittels des Abstandssensors 70 erfasster Abstand ausgewertet. In einer anderen Ausgestaltung ist ein zusätzlicher Sensor vorgesehen ist, welcher gestaltet ist, um die Aussparung am Boden der Ablage abzutasten.

Nachfolgend wird ein Verfahren zum Handhaben einer Produktlage 2 unter Verwendung der Greifvorrichtung 1 beschrieben.

Die Greifvorrichtung 1 wird zunächst derart angetrieben, dass sie sich dem Stapel von oben nähert. Eine Anfahrposition der Greifvorrichtung 1 ist dabei derart gewählt, dass der untere Rand 32 der Saugglocke 3 auf die oberste Produktlage des Stapels leicht aufsetzt.

Dabei stützen sich die freien Enden der Druckelemente 5 auf der obersten Produktlage ab, wobei in dem dargestellten Ausführungsbeispiel die Faltenbälge 52 elastisch verformt werden und aufgrund der Verformung die Faltenbälge 52 eine Druckraft auf Außenbereiche der zu greifenden Produktlage 2 aufbringen. Die Balgsauggreifer sind dabei derart dimensioniert, dass lediglich eine leichte Druckkraft aufgebracht wird.

Nach dem Aufsetzen der Saugglocke 3, oder alternativ bereits in der Abwärtsbewegung der Greifvorrichtung 1, wird der Bernoulli-Greifer 4 aktiviert, der einen mittigen Bereich der obersten Produktlage 2 ansaugt und in Richtung eines Innenraums der Saugglocke 3 heranzieht.

Bei einer Bewegung der Greifvorrichtung 1 zum Anheben der Produktlage 2 wird die aufgenommene Produktlage 2 verwölbt. Die Verwölbung wird dabei zum einen aufgrund eines Ansaugens der Produktlage 2 in den Innenraum der Saugglocke 3 mittels des Bernoulli-Greifers 4 und zum anderen aufgrund der Druckkräfte, welche mittels der Rückstellkräfte der außerhalb der Saugglocke 3 angeordneten Druckelemente 5 aufgebracht werden, erzielt. Die Verwölbung ist in der Figur lediglich schematisch dargestellt. Greifvorrichtung 1 ist je nach aufzunehmendem Produkt geeignet dimensioniert, sodass nur eine leichte Verwölbung erfolgt, welche keine Beschädigung oder dauerhafte Verformung der aufgenommenen Produktlage bewirkt.

Da eine zweiten Produktlage, welche unter der zu ergreifenden obersten Produktlage 2 angeordnet ist und eventuell ebenfalls aufgrund der durch den Bernoulli-Greifer 4 aufgebrachten Saugwirkung angesaugt wird, nicht im gleichen Maß verwölbt wird, in anderen Worten diese zweite Produktlage der Verwölbung der obersten Produktlage 2 nicht folgen kann, führt die Verwölbung der obersten Produktlage 2 zu einer Verschiebung der Produktlage 2 relativ zu der darunter angeordneten zweiten Produktlage. Dadurch wird bewirkt, dass die zweite Produktlage sich von der Greifvorrichtung 1 löst.

Die dargestellten Druckelemente 5 sind als Balgsauggreifer gestaltet, welche wie schematisch durch einen Pfeil angedeutet, mit Vakuum oder Unterdruck beaufschlagbar sind.

Beim Anheben der Produktlage 2 erfolgt dabei keine oder nur eine sehr geringe Vakuum- oder Unterdruck-Beaufschlagung, welche kein Ansaugen der Produktlage 2 bewirkt.

Für eine schnelle Bewegung der Greifvorrichtung 1 werden die Balgsauggreifer mit Vakuum oder Unterdruck beaufschlagt und fixieren so Bereiche der Produktlage 2, welche außerhalb der Saugglocke 3 angeordnet sind, sodass die Produktlage 2 gegen ein Verdrehen und/oder eine Lageverschiebung in der Greifvorrichtung 1 gesichert ist.

Sind die Balgsauggreifer mit Vakuum oder Unterdruck beaufschlagt, ziehen sich deren Faltenbälge 52 beim Ansaugen der Produktlage 2 zusammen. Die Balgsauggreifer sind dabei derart ausgelegt, dass das freie Ende 50 des unter Unterdruck - oder Vakuumwirkung zusammengezogenen Faltenbalgs 52 in einer Ebene mit dem freien Rand 32 der Saugglocke 3 liegt. Nach einer Aktivierung der Unterdruck- oder Vakuum-Beaufschlagung der Balgsauggreifer wird so der Verwölbung der Produktlage 2 entgegengewirkt, so dass die Produktlage 2 möglichst eben mittels der Greifvorrichtung 1 transportiert wird.

Die dargestellte Greifvorrichtung weist eine Sensorvorrichtung 7 mit einem Doppellagen-Erfassungssensor 72 auf. Mittels des Doppellagen-Erfassungssensor 72 wird bei einer Bewegung der Greifvorrichtung 1 zu einem Ablageort der Produktlage 2 überprüft, ob eine Vereinzelung der Produktlage 2 erfolgreich war. In einer Ausgestaltung umfasst der Doppellagen-Erfassungssensor 72 einen an dem Bernoulli-Greifer 4 angeordneten Ultraschallsender und einen stationär angeordneten Ultraschallempfänger.

Die Greifvorrichtung 1 überfährt in einer Ausgestaltung den stationären Ultraschallempfänger mit einer kurzen Verweilzeit, wobei anhand einer Dämpfung eines Ultraschallsignals erfassbar ist, ob sich eine, keine oder mehr als eine Produktlage an der Greifvorrichtung 1 befindet. Eine Steuerung der Greifvorrichtung 1 kann basierend auf dem erfassten Zustand die Greifvorrichtung 1 ansteuern, um die korrekt gegriffene eine Produktlage 2 an dem Anlageort abzusetzen, oder - sofern keine Produktlage vorhanden ist - den Greifvorgang zu wiederholen, oder - sofern mehr als eine Produktlage vorhanden ist - die Doppel- der Mehrfachlage zu separieren.

Die dargestellte Greifvorrichtung 1 weist zudem Blasluftdüsen 6 auf. Vor einer Bewegung der Greifvorrichtung 1 weg von dem Stapel zum Anheben der obersten Produktlage 2, werden in einer Ausgestaltung die seitlich angeordneten Blasluftdüsen 6 kurzzeitig angesteuert, sodass obere Produktlagen 20 des Stapels mittels der eingebrachten Blasluft auffächern. Dadurch wird eine Unterdruckwirkung zwischen der aufzugreifenden Produktlage 2 und den darunter befindlichen Produktlagen 20 zum Zeitpunkt des Abhebens vermieden.

Der Stapel ist auf oder in einer Ablage (nicht dargestellt) angeordnet und wird in einer Ausgestaltung mit der Ablage mittels einer Aktorik (nicht dargestellt) angehoben, so dass eine oberste Produktlage in einer vorgegebene Entnahmeposition angeordnet ist. Aufgrund unvorhersehbarer Verwölbungen einzelner Produktlagen im Stapel als auch aufgrund versehentlich gegriffener Doppellagen kann die tatsächliche Höhe der obersten Produktlage von der vorgegebenen Entnahmeposition abweichen.

In dem dargestellten Ausführungsbeispiel ist daher der Abstandssensor 70 vorgesehen, wobei mittels des Abstandssensors 70 bei einer Annäherung der Greifvorrichtung 1 zu dem Stapel ein Abstand zu der obersten Produktlage und damit eine Abweichung einer tatsächlichen Entnahmeposition der obersten Produktlage von einer vorgegebenen Entnahmeposition detektierbar sind und die Anfahrposition entsprechend korrigiert werden kann.

## Patentansprüche

1. Greifvorrichtung zur Handhabung von Produktlagen, insbesondere zur Aufnahme und zum Transport einer auf einem Stapel abgelegten Produktlage (2), umfassend einen Bernoulli-Greifer (4) mit einer zentralen Ausströmöffnung und mehrere über den Umfang des Bernoulli-Greifers (4) verteilt angeordnete Druckelemente (5), **dadurch gekennzeichnet, dass** eine Saugglocke (3) mit einem Innenraum (30) und einen unteren Rand (32) vorgesehen ist, wobei der Bernoulli-Greifer (4) in dem Innenraum (30) der Saugglocke (3) angeordnet ist und die Druckelemente (5) außerhalb der Saugglocke (3) angeordnet sind, wobei die Druckelemente (5) ein freies Ende (50) aufweisen, welches in Richtung einer Längsachse (34) der Saugglocke (30) elastisch verstellbar ist, und wobei die freien Enden (50) der Druckelemente (5) in einem belastungsfreien Zustand von einer Ebene des unteren Rands (32) abragen.

2. Greifvorrichtung nach Anspruch 1, **dadurch gekennzeichnet, dass** die Druckelemente (5) als Sauggreifer gestaltet sind, welche an dem freien Ende (50) eine Saugöffnung aufweisen, wobei die Sauggreifer insbesondere als Balgsauggreifer umfassend einen elastisch verstellbaren Faltenbalg (52) gestaltet sind.

3. Greifvorrichtung nach Anspruch 2, **dadurch gekennzeichnet, dass** die Sauggreifer derart dimensioniert sind, dass in einem aktiven Zustand der Sauggreifer das freie Ende (50) der Sauggreifer in der Ebene des unteren Rands (32) angeordnet ist.

4. Greifvorrichtung nach Anspruch 1, 2 oder 3, **dadurch gekennzeichnet, dass** eine außerhalb der Saugglocke (3) angeordnete Blasluftdüse vorgesehen ist, wobei vorzugsweise zwei an gegenüberliegenden Seiten der Saugglocke (3) angeordnete Blasluftdüsen vorgesehen sind.

5. Greifvorrichtung nach einem der Ansprüche 1 bis 4, **dadurch gekennzeichnet, dass** eine Sensorvorrichtung (7) umfassend einen Abstandssensor (70), der eingerichtet ist, um einen Abstand der Saugglocke (3) von einer obersten Produktlage eines Stapels zu erfassen, und/oder einen Doppellagen-Erfassungssensor (72) vorgesehen ist.

6. Verfahren zur Handhabung von Produktlagen, insbesondere zur Aufnahme und zum Transport einer auf einem Stapel abgelegten Produktlage (2), mittels einer Greifvorrichtung (1) nach einem der Ansprüche 1 bis 5, wobei für ein Anheben der Produktlage (2) der Bernoulli-Greifer (4) aktiviert wird, sodass bei einem Anheben der Produktlage (2) die Produktlage (2) mittels einer Saugkraft des innerhalb der Saugglocke (3) angeordneten Bernoulli-Greifers (4) und mittels Rückstellkräfte der außerhalb der Saugglocke (3) angeordneten Druckelemente (5) verwölbt wird.

7. Verfahren nach Anspruch 6, **dadurch gekennzeichnet, dass** die als Sauggreifer gestalteten Druckelemente (5) bei einem Anheben der Produktlage (2) nicht aktiviert werden und für einen Transport der Produktlage (2) die Sauggreifer nach einem Anheben der Produktlage aktiviert werden, sodass die aufgenommene Produktlage (2) fixiert wird.

8. Verfahren nach Anspruch 6 oder 7, **dadurch gekennzeichnet, dass** obere Produktlagen des Stapels mittels der außerhalb der Saugglocke (3) angeordnete Blasluftdüse (6) bei einem Anheben der Produktlage (2) aufgefächert werden.

9. Verfahren nach einem der Ansprüche 6 bis 8, **dadurch gekennzeichnet, dass** bei einem Transport der Produktlage (2) eine korrekte Aufnahme der Produktlage (2) mittels eines Doppellagen-Erfassungssensor (72) erfasst wird.

10. Verfahren nach einem der Ansprüche 6 bis 9, **dadurch gekennzeichnet, dass** bei einem Aufsetzen der Greifvorrichtung (1) auf einen Stapel zur Aufnahme einer Produktlage (2) ein Abstand zu der Produktlage (2) mittels eines Abstandssensors (70) erfasst wird.

## Claims

1. Gripping device for handling product layers, in particular for picking up and transporting a product layer (2) placed on a stack, comprising a Bernoulli gripper (4) with a central outflow opening and a number of pressure elements (5) arranged distributed over the circumference of the Bernoulli gripper (4), **characterized in that** a suction bell (3) with an interior space (30) and a lower rim (32) is provided, the Bernoulli gripper (4) being arranged in the interior space (30) of the suction bell (3) and the pressure elements (5) being arranged outside the suction bell (3), with the pressure elements (5) having a free end (50), which is flexibly adjustable in the direction of a longitudinal axis (34) of the suction bell (30), and with the free ends (50) of the pressure elements (5) protruding from a plane of the lower rim (32) in an unloaded state.

2. Gripping device according to Claim 1, **characterized in that** the pressure elements (5) are designed as suction grippers, which have a suction opening at the free end (50), the suction grippers being designed in particular as bellows suction grippers comprising a flexibly adjustable bellows (52).

3. Gripping device according to Claim 2, **characterized in that** the suction grippers are dimensioned in such a way that, in an active state of the suction grippers, the free end (50) of the suction grippers is arranged in the plane of the lower rim (32).

4. Gripping device according to Claim 1, 2 or 3, **characterized in that** a blowing-air nozzle arranged outside the suction bell (3) is provided, preferably with two blowing-air nozzles being provided, arranged on opposite sides of the suction bell (3).

5. Gripping device according to one of Claims 1 to 4, **characterized in that** a sensor device (7) is provided, comprising a distance sensor (70), which is designed to detect a distance of the suction bell (3) from an uppermost product layer of a stack, and/or comprising a double-layer detection sensor (72).

6. Method for handling product layers, in particular for picking up and transporting a product layer (2) placed on a stack, by means of a gripping device (1) according to one of Claims 1 to 5, with the Bernoulli gripper (4) being activated for raising the product layer (2), so that, during a raising of the product layer (2), the product layer (2) is made to curve by means of a suction force of the Bernoulli gripper (4) arranged inside the suction bell (3) and by means of restoring forces of the pressure elements (5) arranged outside the suction bell (3).

7. Method according to Claim 6, **characterized in that** the pressure elements (5) designed as suction grippers are not activated during a raising of the product layer (2) and, for transporting the product layer (2), the suction grippers are activated after a raising of the product layer, so that the product layer (2) picked up is fixed.

8. Method according to Claim 6 or 7, **characterized in that**, during a raising of the product layer (2), upper product layers of the stack are fanned out by means of the blowing-air nozzle (6) arranged outside the suction bell (3).

9. Method according to one of Claims 6 to 8, **characterized in that**, during a transport of the product layer (2), a correct pick-up of the product layer (2) is detected by means of a double-layer detection sensor (72) .

10. Method according to one of Claims 6 to 9, **characterized in that**, during a setting down of the gripping device (1) onto a stack for picking up a product layer (2), a distance from the product layer (2) is detected by means of a distance sensor (70).

## Revendications

1. Dispositif de préhension destiné à la manipulation de couches de produits, notamment destiné à la prise et au transport d'une couche de produits (2) déposée sur une pile, comprenant une pince de Bernoulli (4) pourvue d'une ouverture d'écoulement de sortie centrale et plusieurs éléments de pression (5) répartis sur la périphérie de la pince de Bernoulli (4), **caractérisé en ce qu'**une cloche d'aspiration (3) comportant un espace intérieur (30) et un bord inférieur (32) est présente, la pince de Bernoulli (4) étant disposée dans l'espace intérieur (30) de la cloche d'aspiration (3) et les éléments de pression (5) étant disposés à l'extérieur de la cloche d'aspiration (3), les éléments de pression (5) possédant une extrémité libre (50) qui est positionnable de manière élastique dans la direction d'un axe longitudinal (34) de la cloche d'aspiration (30), et les extrémités libres (50) des éléments de pression (5), dans un état sans charge, dépassant d'un plan du bord inférieur (32).

2. Dispositif de préhension selon la revendication 1, **caractérisé en ce que** les éléments de pression (5) sont réalisés sous la forme de ventouses qui possèdent une ouverture d'aspiration au niveau de l'extrémité libre (50), les ventouses étant notamment réalisées sous la forme de ventouses à soufflet comprenant un soufflet (52) positionnable élastiquement.

3. Dispositif de préhension selon la revendication 2, **caractérisé en ce que** les ventouses sont dimensionnées de telle sorte que, dans un état actif des ventouses, l'extrémité libre (50) des ventouses est disposée dans le plan du bord inférieur (32).

4. Dispositif de préhension selon la revendication 1, 2 ou 3, **caractérisé en ce qu'**une buse d'air de soufflage est présente, disposée à l'extérieur de la cloche d'aspiration (3), deux buses d'air de soufflage étant de préférence présentes sur des côtés opposés de la cloche d'aspiration (3).

5. Dispositif de préhension selon l'une des revendications 1 à 4, **caractérisé par** la présence d'un dispositif de détection (7), lequel comporte un capteur de distance (70) qui est conçu pour détecter une distance de la cloche d'aspiration (3) par rapport à une couche supérieure de produit d'une pile, et/ou d'un capteur de détection de double couche (72).

6. Procédé de manipulation de couches de produits, notamment de prise et de transport d'une couche de produits (2) déposée sur une pile, au moyen d'un dispositif de préhension (1) selon l'une des revendications 1 à 5, la pince de Bernoulli (4) étant activée pour un levage de la couche de produits (2) de sorte que, lors d'un levage de la couche de produits (2), la couche de produits (2) est bombée au moyen d'une force d'aspiration de la pince de Bernoulli (4) disposée à l'intérieur de la cloche d'aspiration (3) et au moyen de forces de rappel des éléments de pression (5) disposés à l'extérieur de la cloche d'aspiration (3).

7. Procédé selon la revendication 6, **caractérisé en ce que** les éléments de pression (5) réalisés sous la forme de ventouses ne sont pas activés lors d'un levage de la couche de produits (2) et, pour un transport de la couche de produits (2), les ventouses sont activées après un levage de la couche de produits, de sorte que la couche de produits (2) reçue est bloquée.

8. Procédé selon la revendication 6 ou 7, **caractérisé en ce que** des couches supérieures de produits de la pile sont déployées au moyen de la buse d'air de soufflage (6) disposée à l'extérieur de la cloche d'aspiration (3) lors d'un levage de la couche de produits (2).

9. Procédé selon l'une des revendications 6 à 8, **caractérisé en ce que**, lors d'un transport de la couche de produits (2), une prise correcte de la couche de produits (2) est détectée au moyen d'un capteur de détection de double couche (72).

10. Procédé selon l'une des revendications 6 à 9, **caractérisé en ce que**, lors d'une mise en place du dispositif de préhension (1) sur une pile en vue de la prise d'une couche de produits (2), une distance par rapport à la couche de produits (2) est détectée au moyen d'un capteur de distance (70).
